# EUROPEAN PATENT APPLICATION

(11) **EP 1 447 734 A2**
(43) Date of publication of application: **18.08.2004**
(21) Application number: 04250504.0
(22) Date of filing: 30.01.2004
(51) Int. Cl.: G06F 1/00

(54) **Reconfigurable secure input device**

(30) Priority: 07.02.2003 US 359780
(71) Applicant: Minebea Co., Tokyo 153-8662 (JP)
(72) Inventor: Fauble, Charles, Canyon Country, California 91387 (US); Dickerman, Robert, El Segundo, California 90245 (US); Takeda, Toshisada, Simi Valley, California 93063 (US)
(74) Representative: Every, David Aidan

(57) **Abstract**

A reconfigurable secure input device (RSID) receives an encryption key and at least one transformation instruction. The RSID stores the encryption key in a memory section. The RSID stores the at least one transformation instruction in a second memory section. A RSID processor utilizes the at least one transformation instruction to create a plurality of transformed codes. The plurality of transformed codes along with a plurality of values corresponding to each of the plurality of potential actual input device inputs are both stored in a transformed lookup table. The RSID processor receives an actual input device input. The RSID processor matches the actual input device input with one of the plurality of the potential keyboard inputs to create a matching value. The RSID processor outputs a matching transformed code from the transformed lookup table corresponding to the matching value.

## Description

### RELATED APPLICATIONS

This is a continuation-in-part of co-pending patent application serial No. 10/078,727, filed February 19, 2002.

### BACKGROUND OF THE INVENTION

### 1. Field of the Invention

The present invention generally relates to secure communications utilizing an input device. More particularly, the present invention relates to a secure reconfigurable input device to be utilized in secure communications between computing systems, or alternatively to be utilized in secure communications between the reconfigurable secure input device and a computing device.

### 2. Discussion of the Related Art

The growth of the Internet has led to a change in the way business is conducted. Consumers and businesses may purchase many products from web sites located on the Internet utilizing credit card or checking account information. A major concern has arisen regarding the security level of the Internet, specifically when sensitive personal or financial information is being transmitted from a consumer to a web site, e.g., a server hosting the web site. Sensitive personal and financial information may include credit-card information, social security numbers, bank-account information or privileged information.

The most popular form of computer security on the Internet is encryption. Encryption is the process of encoding information in such a way that only the person (or computer) with the key is able to decode it. Computer encryption is based on cryptography, which is coding messages. Computer encryption may fall into two categories: Symmetric-key encryption and public-key encryption. Symmetric-key encryption requires that each computer have a secret key. The secret key is used to encode and decode the information transmitted between the two computers. In order for symmetric-key encryption to work, the secret key must be provided to each of the two computers. If this is done over a non-secure transmission line, the security of the secret key may be compromised and someone may be able to intercept the secret key.

Public-key encryption utilizes a combination of a private key and a public key. The public key is provided to any computer that wants to communicate securely with a central computer. The central computer also has a private key that is known only to the central computer. Note that if two-way communication is necessary, both computers may have a public key and a private key.

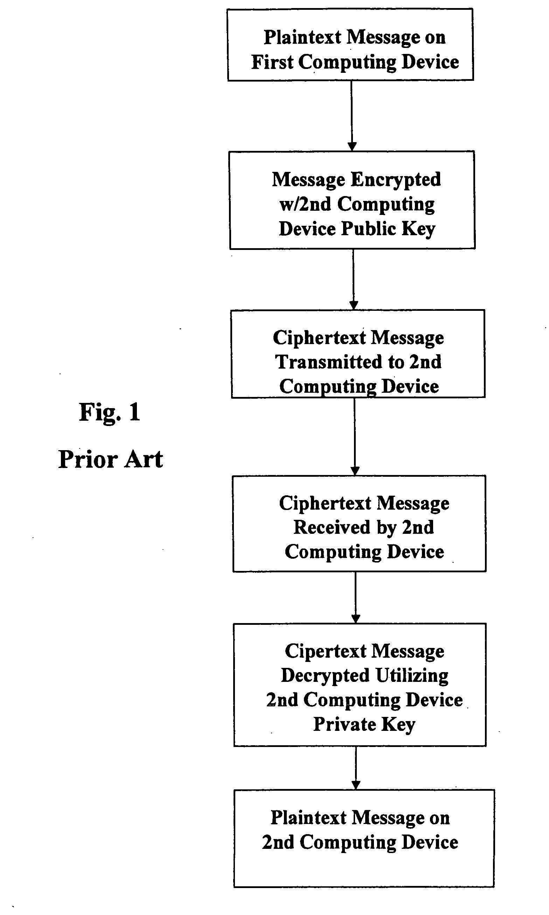

Fig. 1 illustrates the message flow of public-key encryption between computers according to the prior art. A first computing device contains a message in plaintext, e.g., a message that may be understood without any special measures. The first computing device utilizes the public key of the second computing device to encrypt the plaintext message into a ciphertext message, e.g., an encrypted message. The first computing device transmits the ciphertext message to the second computing device. The second computing device receives the ciphertext message and utilizes its private key to decrypt the ciphertext message and translate it back into the plaintext message. The second computing device public key is utilized only to encrypt messages. The primary benefit of public-key encryption is that it allows people who have no pre-existing security arrangement to exchange messages securely.

The public keys and private keys are mathematically related; however, it is mathematically difficult to derive the private key given only the public key. It is possible to derive the private key if enough computing power is utilized and enough time is provided. The larger the size of the public key, the more difficult it is to decipher. Industry standards are presently at 1024 bits, with some applications utilizing 2048 bits.

Another major benefit of public-key encryption is that digital signatures may be utilized by the two computing devices. A digital signature allows the recipient of the information to verify the authenticity of the information's origin. Plus, it allows the recipient to verify the information has not been altered in transit. Also, it allows the recipient to have non-repudiation, e.g., the sender may not deny that the message was sent.

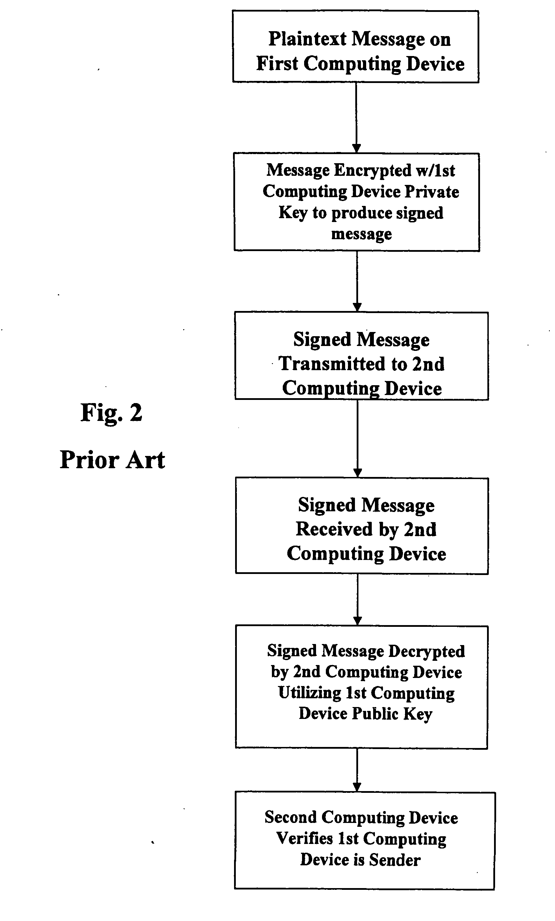

Fig. 2 illustrates steps in the use of a digital signature between a first and second computing device according to the prior art. A first computing device has a plaintext message that is encrypted with the first device's private key and produces a signed message, e.g., digital signature. The signed message is transmitted from the first computing device to the second computing device. The second device utilizes the first computing device's public key to decrypt the signed message and verify that the first computing device originated the original message. The second computing device produces a verified message.

A problem arises in the use of digital signatures. A large volume of data is generated when encrypting a plaintext message with the private key because 1024 bits or 2048 bits may be used by the key which results in the plaintext message being 1024 to 2048 bits long. A one-way hash function will allow less data to be generated. The one-way hash function takes variable-length input, e.g., a message with any bit length, and produces a fixed length output, i.e., 180 bits, that is unique for each variable-length input. If the message is changed in any fashion, an entirely different fixed length output value is produced (note the fixed length is 180 bits) for the changed message.

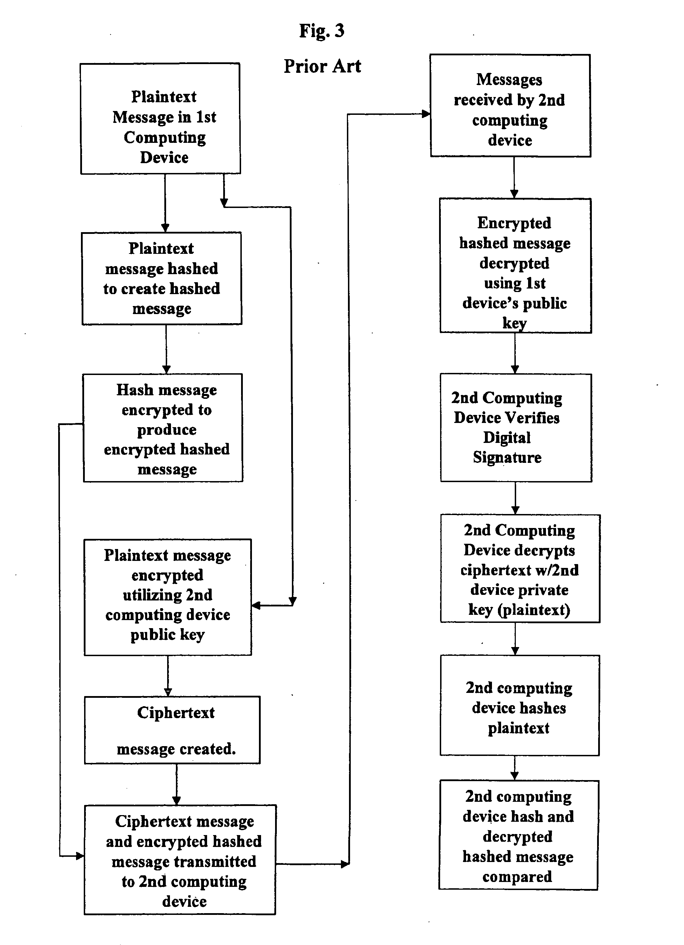

Fig. 3 illustrates a hashing function utilized along with a digital signature in a public-key encryption between two computing devices according to the prior art. The first computing device and the second computing device agree on the hash function to be utilized. The first computing device has a plaintext message it would like to transmit to a second computing device. The plaintext message is run through a hash function to shorten the number of bits and a hashed message is created. The hashed message is encrypted utilizing the private key of the first computing device to create an encrypted hash message. In addition, the plaintext message is encrypted utilizing the second computing device public key and a ciphertext message is created. The encrypted hash message is transmitted along with the ciphertext message to the second computing device with the encrypted hash message enabling a shorter and more manageable digital signature. The second computing device utilizes the first computing device's public key to decrypt the encrypted hash message, produce the hashed message and verify the origin of the message. The second computing device utilizes its private key to decrypt the ciphertext message and create a second plaintext message. In order to verify that the ciphertext message has not been altered in any way, the second computing device utilizes the shared hashing function to produce a second hashed message. The second hashed message is compared to the hashed message decrypted by the second computing device (the two messages should be equal in value) to verify that no alterations have been made. The slightest change to the signed document results in a failure of the hash verification.

Many systems utilize the combination of public-key encryption and symmetric encryption to increase security. Illustratively, secure communication between a first and second computing device may occur in the following manner. The first computing device and the second computing devices may exchange public keys, e.g., a first computing device public key is transmitted to the second computing device and the second computing device public key is transmitted to the first computing device. A device with a random number generator, normally the second computing device, may utilize the random number generator to generate a pseudo-random session key, which is a secret key. If the second computing device generates the secret key, the second computing device transmits the secret key to the first computing device utilizing public-private key cryptography.

After the secret key is shared between the first computing device and second computing device, symmetric cryptography, using the secret key, is performed because the computational burden is lower on the system than with public key cryptography due to the smaller number of bits. In some cases, the public-private key cryptography is utilized only to share the secret key. In some systems, it may also be required that digital signatures are necessary during the transaction and hashing may be utilized in conjunction with the digital signatures. Also, in some secure environments, digitally-signed certificates may be utilized to establish each other's identity during the encrypted session. It is important to share digitally-signed certificates during the session because if the digitally-signed certificates are shared at the beginning, an attacker may sneak in and act like one or both of the parties and intercept communications.

A problem may arise when a hacker intercepts communication between the first computing device and the second computing device. Specifically, a hacker may intercept personal or confidential information by instructing one of the computing devices, normally the first computing device, to send the hacker unencrypted keyboard input. The hacker may accomplish this by installing a program on the first computing device that is attached to a "cookie" file. Alternatively, the hacker may also accomplish this by installing a program anywhere on the first computing device storage device or in the first computing device memory.

"Cookies" are pieces of data placed on a computer's hard drive by a web server, e.g., the second computing device. The "cookies" are stored in a first computing device storage device in a cookie file. "Cookies" are used for many different purposes with one of the most common purposes being the storage of a username and password for accessing the web site resident on the second computing device. "Cookies" may contain any type of information, user's preferences, favorite sites or other customizable information.

The hacker may send a "trojan horse" program to attach itself to "cookies" located on the first computing device storage device and transferred from a web site, e.g., the second computing device. The "trojan horse" program is a program that looks inconsequential or irrelevant and later performs another function, in most cases a damaging function. For instance, if one logged onto the 1-800-Flowers web site and ordered flowers with a credit card, the 1-800-Flowers server may deposit a cookie on the user's computer with private or confidential information regarding the transaction. The hacker or third party may intercept the communication and attach a "trojan horse" program to the "cookie" as it is transmitted. The "trojan horse" program may then attach itself to the "cookie" file on the first computing device's storage device. Another way a ''trojan horse" program may be deposited on a computer is if the hacker sends emails to a group of users offering a discount on product orders. If users open the email, the ''trojan horse" program is activated and will attach itself to cookie files. When the "cookie" file is next activated, the ''trojan horse" program springs into action.

This "trojan horse" program may initiate the next time the "cookie" is retrieved or the next time the consumer accesses the server from where the "cookie" was transmitted. The "trojan horse" program would allow the transaction to proceed normally between the first and second computing device over the Internet but also would instruct the first computing device to transmit the actual keystroke input along with the encrypted data to the hacker's computer. Because the hacker may see the actual keystroke input, the hacker would be able to copy the user's personal and financial information, such as personal identification numbers (PINs), passwords, and credit card information. The problem of a hacker intercepting actual keystroke input is not limited to a ''trojan horse" program attaching itself to a "cookie file." Any hacker-installed program resident on the first computing device's storage device or in the first computing device memory may also intercept actual keyboard input and cause the same type of problem.

U.S. Patent 6,056,193 to McAuliffe et al. discloses a computer keyboard console with an integral encoded device reader, which may for example be a smart code reader, which temporarily blocks communication between the computer keyboard console and host central processing unit by preferably disabling the host CPU when encoded data is input via the smart card reader and/or via keystrokers on the keyboard. A separate microprocessor in the keyboard console verifies the authenticity of the encoded information by comparing it to stored values in a memory and enables the central processing unit once the encoded data has been transmitted and verified. This invention prevents the keyboard from sending information stored on a smart card reader or input from the keyboard during the authentication process. However, the system provides no protection for confidential text messages, confidential financial information, and / or credit-card information when these messages and information are transmitted from the keyboard console of a first computing device to the second computing device.

Accordingly, a need exists to protect all information transmitted from a keyboard to a first computing device when the first computing device is engaging in secure communications with a second computing device.

### BRIEF DESCRIPTION OF THE DRAWINGS

Fig. 1 illustrates the message flow of public-key encryption between computers according to the prior art;
Fig. 2 illustrates the steps in the use of a digital signature between a first and second computing device according to the prior art;
Fig. 3 illustrates a hashing function utilized along with a digital signature in a public-key encryption between two computing devices according to the prior art;
Fig. 4 illustrates a secure communication system according to an embodiment of the present invention;
Fig. 5(a) illustrates a reconfigurable secure input device according to an embodiment of the present invention;
Fig. 5(b) illustrates a secure computing subsystem including a reconfigurable secure input device and a computing device according to an embodiment of the present invention;
Fig. 5(c) illustrates a secure computing subsystem including a reconfigurable secure input device and a computing device according to an embodiment of the present invention;
Fig. 5(d) illustrates a secure computing subsystem including a reconfigurable secure input device, a computing device, and an encryption generator according to an embodiment of the present invention;
Fig. 6 illustrates a reconfigurable secure keyboard input device with a transaction card device according to an embodiment of the present invention;
Fig. 7 illustrates an electronic payment application of the reconfigurable secure input device in a secure communication system according to an embodiment of the present invention; and
Figure 8 illustrates a dataflow diagram of a reconfigurable secure input device of the present invention.

### DETAILED DESCRIPTION

Secure communication may be established locally from a reconfigurable secure input device to another input device by encrypting and/or transforming actual input from the reconfigurable secure input device (RSID). Alternatively, secure communication may be established from a RSID to a first computing device by encrypting and/or transforming actual input from the RSID. In an embodiment of the present invention, a secure communication system may be established over a global network between at least a first computing device and a second computing device which includes additional security because all output from a RSID is encrypted and/or transformed. In this embodiment, the second computing device may establish new codes for some or all potential keyboard inputs. In this embodiment of the present invention, the secure communication system may be utilized for conducting secure business transactions over the global network, e.g., an Internet.

The actual input from a RSID is not limited to input from a standard keyboard, such as 84-key or 101-key keyboards. Illustratively, actual input from the RSID may be received from a keypad, a numeric keypad, a game console, or a control button.

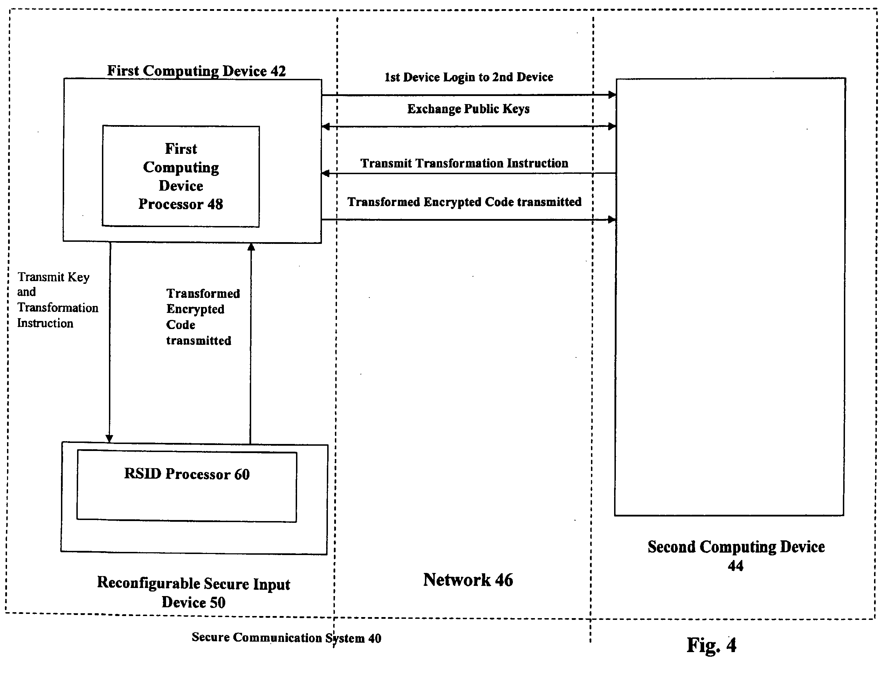

Fig. 4 illustrates operation of a secure communication system according to one embodiment of the present invention. The secure communication system 40 may include a first computing device 42, a second computing device 44, a network 46, and a reconfigurable secure input device (RSID) 50. In an embodiment of the invention, the RSID 50 may be attached to the first computing device 42 via a cable. In an alternative embodiment of the present invention, the RSID 50 may be integrated into the first computing device 42, e.g., when the first computing device is a laptop computing device. The RSID 50 may be a standard keyboard, e.g., 84-key keyboard or 101-key keyboard, a keypad, at least one control button, or a game console.

The secure communication system 40 may be established by the first computing device 42 logging into the second computing device 44 utilizing the network 46. The first computing device 42 and the second computing device 44 may exchange public encryption keys. The second computing device 44 may then generate at least one transformation instruction, encrypt the at least one transformation instruction utilizing the first computing device public key, and transmit the encrypted at least one transformation instruction to the global network 46.

The first computing device 42 may receive the second computing device public key and the encrypted transformation instruction(s) and may transfer the second computing device public key and the encrypted transformation instruction(s) to an RSID 50. The RSID 50 may store the second computing device public key in a memory located in the RSID 50. In one embodiment of the invention, a RSID processor 60 may utilize the private key of the first computing device 42 to decrypt the transformation instruction(s). In an alternative embodiment of the present invention, the first computing device processor 48 may decrypt the transformation instruction(s) before transferring the transformation instruction(s) to the RSID 50.

The transformation instruction(s) may be stored in a memory located in the RSID 50. The RSID processor 60 may execute the transformation instruction(s), and a plurality of codes, which represent all of the potential actual input, may be transformed into a plurality of transformed codes. The plurality of transformed codes may be stored in a memory section located in the RSID 50 along with a plurality of values which correspond to the all of the potential actual input.

In an embodiment of the present invention, the actual input is then input into the RSID 50. In an embodiment of the present invention utilizing a keyboard, the actual input may occur as the result of at least one keystroke. The RSID processor 60 may receive the actual input and may determine one of the plurality of values which represent all of the potential actual input that corresponds to the actual input received. This may be referred to as a matching transformation code. The transformed code corresponding to the one of the plurality of values that corresponds to the actual input may be output and placed in a temporary buffer. The transformed code may be encrypted utilizing the second computing device public key and the encrypted transformed code may be transferred from the RSID 50 to the first computing device 42. The first computing device 42 may transfer the encrypted transformed code to the second computing device 44 via the network 46. The second computing device 44 may receive the encrypted transformed code and decrypt the encrypted transformed code utilizing a second computing device private key. Because the second computing device 44 sent the at least one transformation instruction, the second computing device 44 may decode the transformation code and retrieve the actual input.

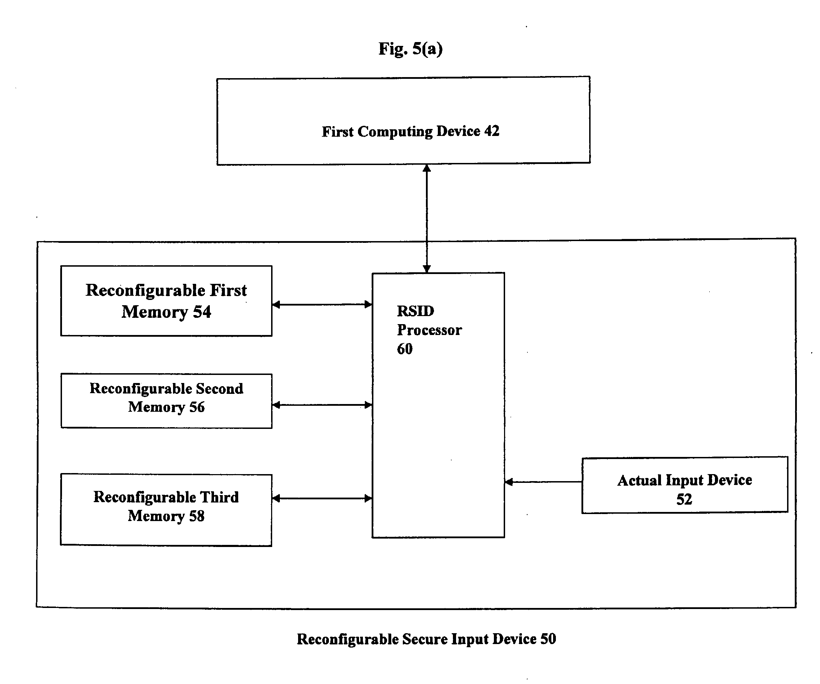

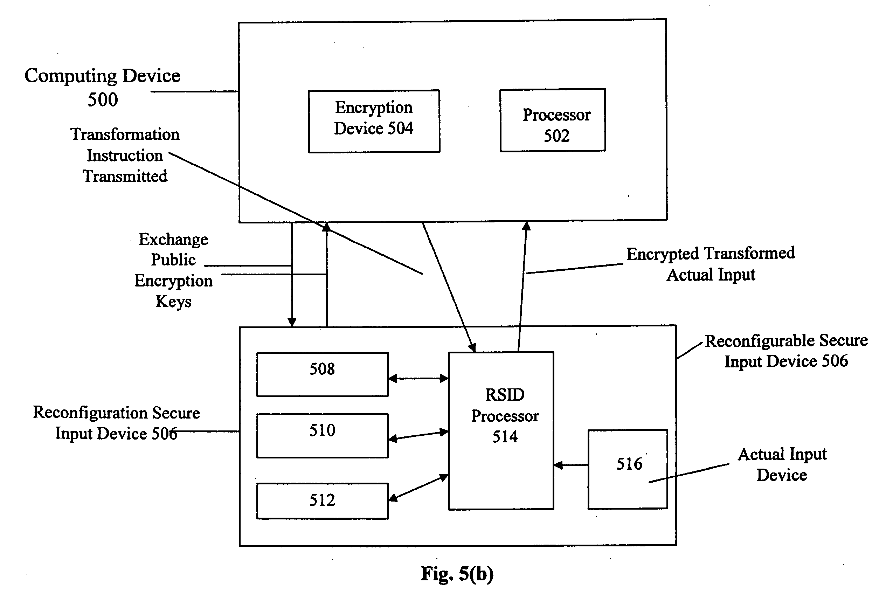

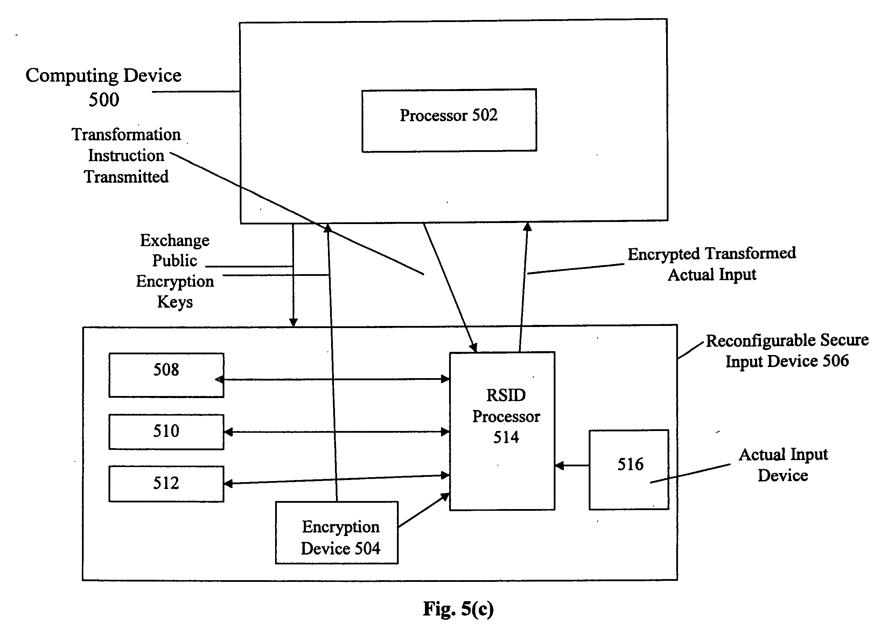

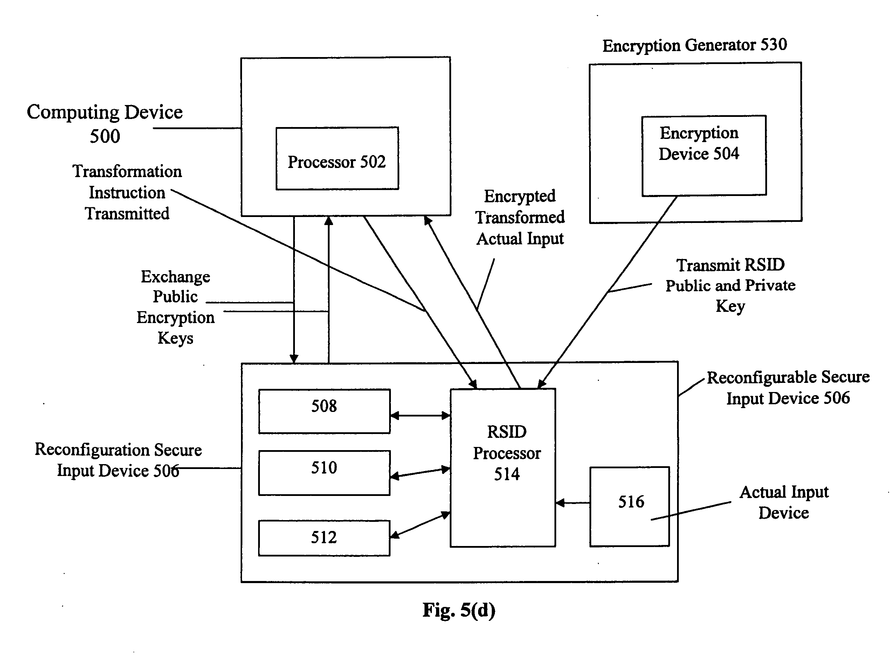

Fig. 5(a) illustrates a reconfigurable secure input device 50 according to an embodiment of the present invention. In this embodiment of the present invention, the reconfigurable secure input device(RSID) 50 may include an actual input device 52, a first memory section 54, a second memory section 56, a third memory section 58, and a RSID processor 60.

The first memory section 54 may be utilized for storing an encryption key. The first memory section 54 may contain one encryption key or may contain multiple encryption keys. The first memory section 54 may be written to or read by only the RSID processor 60. The encryption key may be a public encryption key. Alternatively, the encryption key may be a private encryption key or the encryption key may be a hash value.

The second memory section 56 may be utilized for storing at least one encryption instruction. Alternatively, the second memory section 56 may contain multiple encryption instructions. Alternatively, the second memory section 56 may contain a transformation instruction. Under different operating conditions, the second memory section 56 may contain multiple transformation instructions. In another embodiment of the present invention, the second memory section 56 may contain at least one encryption instruction and at least one transformation instruction. The second memory section 56 may be written to or read by only the RSID processor 60.

The third memory section 58 may include a transformed lookup table. The structure and contents of the transformed lookup table are discussed below. The third memory section 56 may be written to or read by only the RSID processor 60.

In one embodiment of the present invention, the first memory section 54 and the second memory section 56 may be located in one physical memory device. In another embodiment, the first memory section 54, the second memory section 56, and the third memory section 58 may be located in one physical memory device. In an alternative embodiment, any one of or any combination of the first memory section 54, the second memory section 56, and the third memory section 58 may be physically located in a memory card, where the memory card is located in a memory card reader coupled to or installed in the RSID 50. These embodiments are merely illustrative and different combinations of the memory sections may be placed in different physical memory structures.

In one embodiment, the first memory section 54, the second memory section 56, and the third memory section 58 may be physically located in the RSID processor 60. The first memory section 54, the second memory section 56, and the third memory section 58 may be located in random access memory (RAM) within the RSID processor 60. In this embodiment of the invention, the first memory section 54 may be located at a first plurality of addresses of the RSID processor RAM, the second memory section 56 may be located at a second plurality of addresses of the RSID processor RAM, and the third memory section 58 may be located at a third plurality of addresses of the RSID processor RAM. Because the RSID processor 60 RAM is not ROM, additional logic may be included to ensure that any device besides the RSID processor 60 that desires to write or read from the RSID processor 60 RAM is blocked.

The RSID processor 60 may include a standard lookup table. The RAM of the RSID processor 60 may include a standard lookup table. In one embodiment of the invention, the RSID processor 60 may be, for example, an Intel 8051 keyboard processor. The lookup table may include a plurality of codes representative of all of a plurality of potential actual input device inputs. The lookup table also may include values representative of all of the plurality of actual input device inputs. In an embodiment of the present invention utilizing a standard keyboard, the plurality of potential keyboard inputs may be from a single key or may be from a combination of keys.

For example, in an embodiment of the present invention utilizing a keyboard as the RSID, a potential Universal Serial Bus (USB) hexidecimal coded input of "Ctrl-Alt-Del" may have a corresponding code of ("Ctrl" bit, "Alt" bit, 2A) and a corresponding key map location - 15. The potential USB hexidecimal coded keyboard input of letter "a" may have the corresponding code of 04 and a corresponding key map location - 31. The lookup table may include the two codes, e.g., 2A and 04, identified as the codes representative of the two potential keyboard inputs, "Ctrl-Alt-Del" and "a" along with the codes representative of all of the other potential keyboard inputs. In addition, the lookup table may include the values representative of the key map locations of "Ctrl-Alt-Del" and "a" along with the values representative of the key map locations of all of the other potential keyboard inputs.

The RSID processor 60 may retrieve the transformation instruction from a memory section of the RSID 50, e.g., the second memory section 56, and may execute the transformation instruction. The execution of the transformation instruction enables the RSID processor 60 to change some or all of the plurality of codes representative of the potential actual inputs. In one embodiment of the present invention, when the transformation instruction is executed, a transformed lookup table may be created including the changed plurality of codes based on the transformation instruction. The changed plurality of codes may be referred to as transformed codes.

In an embodiment of the present invention where multiple transformation instructions are retrieved from the memory section, the transformed lookup table may be created when the last of the multiple transformation instructions is executed.

After the transformation instruction(s) are executed and the transformed lookup table is created, the transformed lookup table may be stored in a memory section, e.g., the third memory section 58. The transformed lookup table may contain a plurality of values representative of all of the plurality of potential actual input device inputs and transformed codes representative of all of the plurality of potential actual input device inputs.

In an embodiment of the present invention utilizing a standard keyboard, after the transformed lookup table is created and stored in the third memory section 58, the user may depress at least one of the plurality of keys 52. The at least one of the plurality of keys 52 may create contact with a switch matrix which identifies the location of the depressed key(s) in terms of a row and a column. The location in terms of a row and a column may be referred to as a value of one of the potential actual input device inputs. Each of the locations, in terms of a row and column, of the depressed key(s) is equal to a value of one of the plurality of potential actual input device inputs. Thus, an actual input device input may be the location identified by the switch matrix of the actual single keystroke or combination of keystrokes. As previously noted, the standard lookup table and the transformed lookup table both include a plurality of values corresponding to the plurality of potential actual input device inputs. In alternative embodiments of the present invention not utilizing a standard keyboard, the actual input device input may be received from a keypad, control button(s), a game console, or other similar input devices.

The RSID processor 60 may match the actual input device input to one of the plurality of values corresponding to one of the plurality of potential actual input device inputs located in the transformed lookup table to create a matching value. The RSID processor 60 may then retrieve a transformed code located in the transformed lookup table corresponding to the matching value. This may be referred to as a matching transformed code.

In an embodiment of the present invention, the RSID processor 60 may retrieve the encryption key from the first memory section 54. The RSID processor 60 may retrieve the at least one encryption instruction from the second memory section 56. The encryption instruction identifies what type of encryption is being utilized in the application currently utilizing the RSID 50. For example, the application may require symmetric encryption. The encryption instruction may provide the information to the RSID processor 50 to enable the RSID processor 60 to encrypt a matching transformed code or a plurality of matching transformed codes in the requested fashion. For example, in the above case, the matching transformed code retrieved by the RSID processor 60 may be symmetrically encrypted by the RSID processor 60 to create an encrypted matching transformed code.

The first memory section 54, the second memory section 56, and the third memory section 58 may be updated. For example, a second computing device 44 (see Fig. 4) interacting with a first computing device 42, which includes the RSID 50, may require the changing of an encryption key every 15 minutes. Another second computing device 44 may require changing the type of encryption required and the transformation of all of the potential actual input device inputs every two hours, therefore requiring the necessity of changing the at least one encryption instruction and the at least one transformation instruction. Under such operating conditions, the first memory section 54 may receive and store a new encryption key and the second memory section 56 may receive a new transformation instruction(s) and a new encryption instruction(s).

In an embodiment of the present invention, the new encryption key may replace the first encryption key. In an alternative embodiment of the present invention, the new encryption key may be stored in the first memory section 54 along with the first encryption key and the encryption instruction may identify which of the encryption keys to utilize and when to utilize each of the encryption keys. Similarly, the second memory section 56 may also receive new encryption instruction(s) and transformation instruction(s) and the new encryption and transformation instruction(s) may be stored as the only encryption and transformation instruction(s) in the second memory section 56.

Fig. 5(b) illustrates a secure computing subsystem including a reconfigurable secure input device and a computing device according to an embodiment of the present invention. The computing device 500 may include a processor 502 and an encryption device 504. In one embodiment, the RSID 506 may include a first memory section 508, a second memory section 510, a third memory section 512, a RSID processor 514, and an actual input device 516. In another embodiment of the present invention, the RSID processor 514 may include the first memory section 508, a second memory section 510, and the third memory section 512.

The user of the secure computing device subsystem may desire to maintain secure communications between the computing device 500 and the RSID 506 in addition to or apart from any level of security between a computing device 500 and at least a second computing device 44 (see Fig. 4). In one embodiment of the invention, during initialization of the computing device 500, the encryption device 504 within the computing device 500 may generate a public encryption key for both the computing device 500 and the RSID 506. In this embodiment, the encryption device 504 may retain the public encryption key for the RSID 506 and transmit the computing device public encryption key to the RSID 506 during initialization of the computing device 500. The encryption device 504 may also generate a computing device private encryption key and a RSID private encryption key. After creation of the RSID private encryption key, the computing device 500 may maintain the computing device private encryption key and may transmit the RSID private encryption key to the RSID.

If the encryption device 504 does not generate the RSID private encryption key, because the RSID private encryption key must be mathematically related to the RSID public encryption key, the encryption device 504 in the computing device 500 may need to know the RSID private encryption key. The computing device 500 may need to have the RSID private encryption key stored in a read-only memory or non-accessible memory, or alternatively, may need to have the RSID private encryption key transmitted to the computing device during initialization of the computing device 500 and the RSID 506.

Under alternative operating conditions, as illustrated in Fig. 5(b), the RSID public encryption key may be stored in the RSID processor 514 or in the RSID first memory section 508, the RSID second memory section 510, and/or the RSID third memory section 512. In embodiments where the public encryption key is stored in the RSID processor 514 or one of the RSID memory sections 508 510 or 512, the RSID 506 may transmit the public encryption key to the computing device 500 during initialization or during a period of time after initialization of the computing device 500. In return or simultaneously to the transmitting of the RSID public encryption key, the computing device 500 may transmit the computing device public encryption key to the RSID 506. The RSID 506 may store the public encryption key in one or more of the RSID memory sections 508, 510, and 512. In one embodiment, the second memory section 510 may be utilized.

The processor 502 in the computing device 500 may generate a transformation instruction. Alternatively, the encryption device 504 in the computing device 500 may generate a transformation instruction. Regardless of the embodiment, the encryption device 504 may encrypt the transformation instruction utilizing the RSID's public encryption key and may transmit the encrypted transformation instruction to the RSID 506.

The RSID 506 may receive the encrypted transformation instruction. In one embodiment of the present invention, the RSID processor 514 may decrypt the encrypted transformation instruction and store the encrypted transformation instruction in one or more of the RSID's memory sections 508, 510, or 512. In other embodiments of the present invention, the encrypted transformation instruction may be stored in one or more of the RSID's memory sections 508, 510, or 512 and the RSID processor 514 may later retrieve the encrypted transformation instruction and utilize the RSID private key to decrypt the transformation instruction.

In an embodiment of the invention, the RSID processor 514 may execute the decrypted transformation instruction and a plurality of codes, which represent all of the potential actual input device input, e.g., keyboard input, may be transformed into a plurality of transformed codes. After the generation of the plurality of transformed codes, the plurality of transformed codes may be stored in one of the RSID's memory sections 508 510 and 512 along with values representing the plurality of potential actual input device input. This may be referred to as a transformed lookup table.

Actual input device input is received at the RSID 506. The RSID processor 514 may receive the actual input device input and may determine one of the plurality of values which represents or matches the actual input device input. This may be referred to as a matching value. The RSID processor 514 may utilize the table of the plurality of transformed codes and potential actual keyboard inputs to determine a matching transformed code for the actual input device input.

Under one set of operating conditions, once a specified amount of matching transformed codes have been generated, the RSID processor 514 may retrieve the computing device public encryption key from the corresponding RSID memory section 508, 510, or 512. In one embodiment of the invention where the RSID 506 is a keyboard, the specified amount of matching transformed codes may be a single matching transformed code representing a keystroke or a combination of keystrokes. In one embodiment, the RSID processor 514 may retrieve the computing device encryption key from the first RSID memory section 508. The RSID processor 514 may encrypt the specified amount of the matching transformed codes. The RSID processor 514 may transmit the encrypted matching transformed codes to the computing device 500. The computing device 500 may receive the encrypted matching transformed codes and may decrypt, utilizing the computing device private encryption key, the encrypted matching transformed codes to generate the matching transformed codes representing actual input device input. Because the computing device 500 generates the transformation instruction, the computing device 500 may decipher the matching transformed codes to recreate the actual input device input.

In alternative embodiments of the present invention, the RSID processor 514 may retrieve an encryption instruction from one of the RSID memories 508, 510, and/or 512. As previously noted, the encryption instruction may identify a special mode of encryption to be utilized in the application currently utilizing the RSID 506. The encryption instruction provides the information to the RSID processor 514 to enable the RSID processor 514 to encrypt the matching transformed codes in the requested fashion. For example, the encryption instruction may instruct the RSID processor 514 to alternate utilizing a first computing device public encryption key for odd numbered matching transformed codes and utilizing a second computing device public encryption key for even numbered matching transformed codes.

Fig. 5(c) illustrates a secure computing subsystem including a reconfigurable secure input device and a computing device according to an embodiment of the present invention. The computing device 500 may include a processor 502. In one embodiment, the reconfigurable secure input device (RSID) 506 may include an encryption device 504, a first memory section 508, a second memory section 510, a third memory section 512, a RSID processor 514, and an actual input device 516. In another embodiment of the present invention, the RSID processor 514 may include the first memory section 508, the second memory section 510, and the third memory section 512.

Under certain operating conditions, the computing device 500 may have an established public encryption key. The computing device 500 may retrieve a computing device public encryption key and a computing device private encryption key from a read-only memory within the computing device 500 during initialization of the computing device 500. Under alternative operating conditions, the computing device 500 may include a second encryption device (not shown) to generate a computing device public and private encryption key during initialization.

In this embodiment, during initialization, the encryption device 504 in the RSID 506 may generate a RSID public encryption key and a RSID private encryption key. After the computing device 500 public encryption key is generated and the RSID public encryption key is generated, the computing device 500 and the RSID 506 may exchange public key information, i.e., the computing device 500 may transmit the computing device public encryption key to the RSID 506 and the RSID 506 may transmit the RSID public encryption key to the computing device 500.

Under certain operating conditions, the processor 502 in the computing device 500 may generate a transformation instruction. The computing device 500 may encrypt the transformation instruction utilizing the RSID's public encryption key and may transmit the encrypted transformation instruction to the RSID 506.

The RSID 506 may receive the encrypted transformation instruction. In certain operating conditions, the RSID processor 514 may decrypt the encrypted transformation instruction, utilizing the RSID private encryption key, and store the transformation instruction in one of the RSID's memory sections 508 510 512. In alternative operating conditions, the RSID processor 514 may first store the transformation instruction in one or more of the RSID's memory sections 508, 510, or 512, and later retrieve the transformation instruction and utilize the RSID private encryption key to decrypt the transformation instruction.

In an embodiment of the invention, the RSID processor 514 may execute the decrypted transformation instruction and a plurality of codes, which represent all of the potential actual input device input, e.g., keyboard input, may be transformed into a plurality of transformed codes. After the generation of the plurality of transformed codes, the plurality of transformed codes may be stored in one or more of the RSID's memory sections 508, 510, and 512. In the same RSID memory section(s) 508, 510, and 512, as the plurality of transformed codes may be a plurality of values which correspond to all of the potential actual input device inputs, as discussed previously.

Actual input may be input into the RSID 506 from the actual input device 516. The RSID processor 514 may receive the actual input and determine one of the plurality of values which represents the actual input and this may be referred to as a matching value. The RSID processor 514 may utilize the table of the plurality of transformed codes and potential actual keyboard inputs to determine the transformed code or matching transformed code of the one of the plurality of values, i.e., the matching value, which represents the actual input device input.

Under certain operating conditions, once a specified amount of matching transformed codes has been generated, the RSID processor 514 may retrieve the computing device public encryption key from the corresponding RSID memory sections 508 510 512. The RSID processor 514 may encrypt the specified amount of the transformed codes to create encrypted matching transformed codes. The RSID processor 514 may transmit the specified amount of the encrypted matching transformed codes to the computing device 500.

The computing device 500 may receive the specified amount of encrypted matching transformed codes. The computing device 500 may utilize the computing device private encryption key to decrypt the specified amount of the encrypted matching transformed codes and generate the specified amount of matching transformed codes. Because the computing device 500 generated the transformation instruction, the computing device 500 may decipher the specified amount of transformed actual input and re-create the actual input device input from the matching transformed codes.

Fig. 5(d) illustrates a secure computing subsystem including a reconfigurable secure input device, a computing device, and an encryption generator according to an embodiment of the present invention. The computing device 500 may include a processor 502. In one embodiment, the reconfigurable secure input device (RSID) 506 may include a first memory section 508, a second memory section 510, a third memory section 512, a RSID processor 514, and an actual input device 516. In another embodiment of the present invention, the RSID processor 514 may include the first memory section 508, the second memory section 510, and the third memory section 512. The encryption generator 530 may include an encryption device 504.

In certain operating conditions, the computing device 500 may have an established public encryption key and private encryption key. The computing device 500 may retrieve a computing device public encryption key and a computing device private encryption key from a read-only memory within the computing device 500 during initialization of the computing device 500. Under alternative operating conditions, the computing device 500 may include a second encryption device (not shown) to generate a computing device public encryption key and a computing device private encryption key during initialization.

In this embodiment, during initialization, the encryption device 504 in the encryption generator 530 may generate a RSID public encryption key and a RSID private encryption key. The encryption generator 530 may transmit the RSID public encryption key and the RSID private encryption key to the RSID 506. After the computing device 500 public encryption key is generated and the RSID public encryption key is generated, the computing device 500 and the RSID 506 may exchange public key information, as described previously.

The processor 502 in the computing device 500 may generate a transformation instruction(s). The computing device 500 may encrypt the transformation instruction(s) utilizing the RSID's public encryption key and may transmit the encrypted transformation instruction(s) to the RSID 506.

The RSID 506 may receive the encrypted transformation instruction(s). Under certain operating conditions, the RSID processor 514 may decrypt the encrypted transformation instruction(s) and store the transformation instruction(s) in one or more of the RSID's memory sections 508, 510, or 512. The RSID processor 514 may later retrieve the transformation instruction.

In an embodiment of the invention, the RSID processor 514 may execute the transformation instruction, and a plurality of codes, which represent all of the potential actual input device input, e.g., keyboard input, may be transformed into a plurality of transformed codes. After the generation of the plurality of transformed codes, the plurality of transformed codes may be stored in one of the RSID's memory sections 508 510 and 512. In the same RSID memory section 508, 510, and 512 as the plurality of transformed codes may be a plurality of values which correspond to all of the potential actual input device inputs, as discussed previously.

Actual input may be input into the RSID 506 from the actual input device 516. The RSID processor **514** may receive the actual input and determine one of the plurality of values which represents the actual input and this may be referred to as a matching value. The RSID processor 514 may utilize the table of the plurality of transformed codes and potential actual input device inputs to determine the transformed code or matching transformed code for the one of the plurality of values, i.e., the matching value, which represents the actual input.

Once a specified amount of matching transformed codes has been generated, the RSID processor 514 may retrieve the computing device public encryption key from the corresponding RSID memory sections 508 510512. The RSID processor 514 may encrypt the specified amount of the matching transformed codes utilizing the computing device public encryption key. The RSID processor 514 may transmit the encrypted specified amount of matching transformed codes to the computing device 500.

The computing device 500 may receive the specified amount of encrypted matching transformed codes. The computing device 500 may utilize the computing device private encryption key to decrypt the specified amount of the encrypted matching transformed codes and generate the specified amount of matching transformed codes. Because the computing device 500 generates the transformation instruction, the computing device 500 may decipher the specified amount of matching transformed codes and re-create the RSID actual input device input.

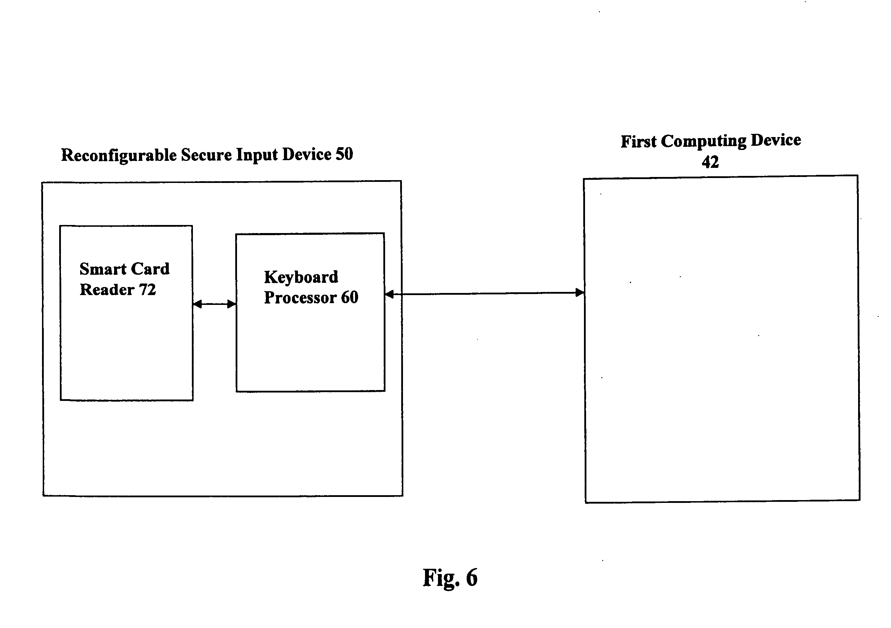

Fig. 6 illustrates a reconfigurable secure keyboard console with a transaction card device according to an embodiment of the present invention. The reconfigurable secure input device (RSID) 50 may include a transaction card device. The transaction card device may be, for example, a smart cart reader 72, a bar code reader, a memory card reader, or a biometric reader. In an embodiment of the invention utilizing a smart card reader, a smart card may be inserted into the smart card reader. In an alternative embodiment of the invention, a subscriber identity module (SIM) may be inserted into the smart card reader.

In an embodiment of the present invention including a smart cart reader 72, the smart cart reader 72 may be installed inside the RSID 50. In order for a user to be able to utilize the RSID 50, the user must be able to match a unique identification number encoded on a smart card that may be inserted into the smart card reader 72. The user of a first computing device 42 may insert a smart card into a smart card reader 72, with the smart card containing the unique identification number encoded on the smart card. The unique identification number is read from the smart card, and transferred through from the smart cart reader 72 through a smart card interface of the RSID 50 to a secure memory location. The secure memory location may be inside the keyboard processor 60.

In an embodiment of the present invention utilizing a standard keyboard, after the smart card is inserted into the smart card reader 72, the user may utilize a combination of keys 52 on the RSID to replicate the unique identification number encoded on the smart card. In order to prevent the keyboard input produced by the user to be transferred to a first computing device external to the RSID 50, the RSID processor 60 directs the keyboard input to the secure memory location for comparison with the unique identification number from the smart card. If the keyboard input matches the unique identification number from the smart card, then the user is allowed to start login to the first computing device 42. The RSID processor 60 notifies the first computing device 42 that the user is authenticated by sending a verification message. The verification message may be encrypted by the RSID processor 60, depending on the contents of the at least one encryption instruction. Alternatively, the verification may not be encrypted.

Once the user has been verified as authentic, the user may need to login to the operating system of the first computing device 42. The smart card may also contain the operating system login information. In an embodiment of the present invention where the first computing device 42 utilizes one of the Microsoft Windows operating systems, the smart card may contain the windows login information, e.g., a username and password. The Windows login information may be read from the smart card via the smart card reader 72 and brought into a temporary storage location in the RSID 50. A standard has been established for the encryption of login information, and it is included the personal computer / smart card (PC/SC) specification 1.0. In this embodiment of the invention, the Windows login information is encrypted according to the PC/SC 1.0 standard and transmitted via, e.g., either a Universal Serial Bus (USB) or RS-232C interface to the first computing device 42. The first computing device 42 decrypts the Windows login information and verifies that the user is allowed access to the operating system on the first computing device. Once the Windows login information is verified, the user may run any applications, including logging onto the Internet to engage in secure transactions.

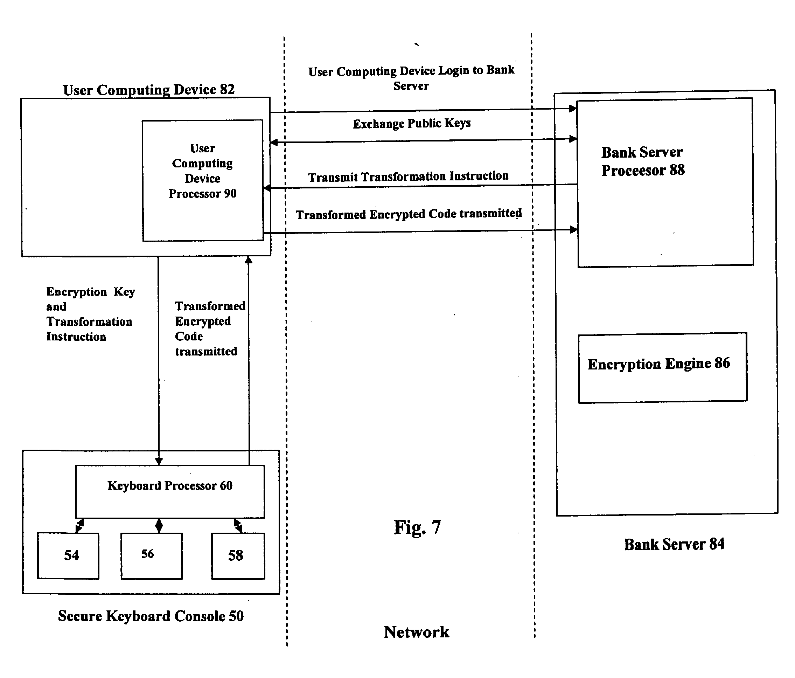

An embodiment of the present invention may be utilized in many different business environments to conduct secure business transactions. For example, an individual consumer may wish to submit an electronic payment to a bank over a network like the Internet. Fig. 7 illustrates an electronic payment application of the reconfigurable secure input device 50 in a secure communication system 80 according to an embodiment of the present invention. The electronic payment information consists of the user entering a checking account number, a social security number, a bank routing number and the payment amount through the reconfigurable secure keyboard console. By utilizing an embodiment of the present invention, the user is protected from a hacker attaching a "trojan horse" program to the bank's "cookie" file on the first computing device storage device, and diverting the unencrypted data from the reconfigurable secure input device (RSID) 50 to his computer.

In one embodiment of the present invention, the user computing device 82 may send a confidential message input via the RSID 50, including the electronic payment information, over the Internet to the bank server 84. The bank server 84 may transform the codes corresponding to the plurality of potential keyboard inputs to a plurality of transformed codes corresponding to the plurality of potential keyboard inputs. Before sending the confidential message, the user computing device 82 must login to the bank server 84. The user computing device 82 and the bank server 84 may exchange public keys. Alternatively, the user computing device 82 may retrieve the bank server's public key from a publicly accessible location, e.g., the bank server web site and transfer the user computing device public key to the bank server 84. Because the bank server 84 may require the additional security of transforming the codes corresponding to the plurality of potential keyboard inputs, the bank server encryption engine 86 may generate a pseudo-random session key, which may be used later for symmetric encryption.

Public-key encryption may be used between the bank server 84 and the user computing device 82 to share the session key. Illustratively, the bank server 84 may encrypt the session key utilizing the user computing device public key and transmit the encrypted session key over the global network to the user computing device 82. The user computing device 82 decrypts the session key by utilizing the user computing device private key. The session key may be stored in a memory of the user computing device 82. The session key may also be transferred to the RSID 50 and stored in the first memory section 54. Once the session key is decrypted, communications between the user computing device 82 and the bank server 84 may be symmetrically encrypted utilizing the session key.

The bank server may symmetrically encrypt the transformation instruction(s) by having the encryption engine 86 utilize the session key. The symmetrically encrypted transformation instruction(s) may be transferred to the bank server processor 88 and then to the user computing device 82 over the network. The user computing device processor 90 may symmetrically decrypt the symmetrically encrypted transformation instruction(s) and transfer the transformation instruction(s) to the RSID 50. Alternatively, the user computing device processor 90 may transfer the symmetrically encrypted transformation instruction(s) directly to the RSID 50 without attempting decryption in the user computing device 82. Because the RSID 50 may have the session key already stored in the first memory section 54, the RSID processor 60 may utilize the session key to decrypt the symmetrically encrypted transformation instruction(s) within the RSID 50. Once the symmetrically encrypted transformation instruction(s) within the RSID 50 is decrypted, the transformation instruction may be stored in a second memory section 56.

The RSID processor 60 may execute the transformation instruction(s). The transformation instruction(s) identifies how the codes representative of all of the potential actual input device inputs may be transformed to meet the bank server's transformation requirements. Execution of the transformation instruction(s) creates the plurality of transformed codes, which are representative of all the potential actual input device inputs. The plurality of transformed codes and a plurality of values representative of all of the potential actual input device inputs may then be stored in the transformed lookup table, which may be located in the third memory section 58. Because the at least one transformation instruction has been executed, any actual input device input from the RSID 50 may utilize the transformed lookup table and not the standard lookup table, which is located in the RSID processor 60.

In an embodiment of the present invention utilizing the standard keyboard, the user of the user computing device may now enter the sensitive information (amount, bank routing number, etc.) by depressing the appropriate keys on the RSID 50. When each keyboard input is received, the RSID processor 60, i.e. keyboard processor, may match the actual keyboard input to a value in the transformed lookup table representative of that actual keyboard input. The RSID processor 60 may then generate the transformed code representative of the keyboard input by using the transformed code corresponding to the value representative of the actual keyboard input. The transformed code representative of the actual keyboard input may be stored in a temporary buffer within the RSID processor 60 until the temporary buffer receives enough transformed codes to fill the temporary buffer. In this embodiment of the present invention, the RSID processor 60 may then utilize the session key, which is stored in the first memory section 54, to encrypt the transformed code(s) from the temporary buffer and create symmetrically encrypted transformed code(s). In an alternative embodiment of the present invention, the RSID processor 60 may utilize the session key to symmetrically encrypt each transformed code directly after the transformed code has been generated.

The RSID processor 60 may transmit the symmetrically encrypted transformed code(s) to the user computer device 82. In this embodiment of the invention, the user computing device processor 90 may transfer the symmetrically encrypted transformed code(s) directly to the bank server 84 via the Intemet. The bank server processor 88 and encryption engine 86 may utilize the session key to decrypt the symmetrically encrypted transformed code(s), which results in the transformed codes being resident within the bank server 84. Because the bank server 84 provided the transformation instruction, the bank server processor 88 understands which of the potential keyboard inputs each of the transformed codes represents. Thus, the bank server processor 88 is able to retrieve the confidential information from the user of the user computing device 82, e.g., account information, payment amount, bank routing number, etc., in a completely secure transmission and without a hacker being able to intercept any of the data.

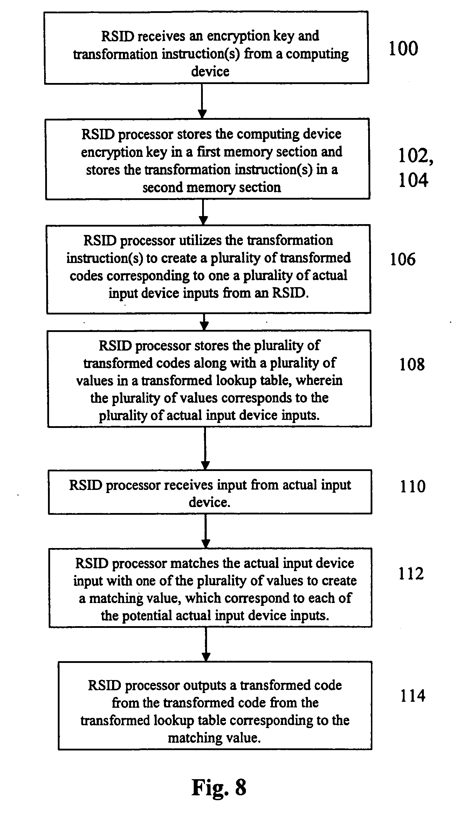

Figure 8 illustrates a dataflow diagram of a reconfigurable secure input device of the present invention. The reconfigurable secure input device (RSID) receives 100 an encryption key and at least one transformation instruction from a computing device. A RSID processor 102 stores the encryption key in a first memory section and stores 104 the transformation instruction(s) in a second memory section. The RSID processor utilizes 106 the transformation instruction(s) to create a plurality of transformed codes corresponding to one of a plurality of potential actual input device inputs from a RSID. The RSID processor 60 stores 108 the plurality of transformed codes along with a plurality of values in a transformed lookup table, wherein the plurality of values corresponds to each of the plurality of potential actual input device inputs. The RSID processor 60 receives 110 an actual RSID input. The RSID processor 60 matches 112 the actual keyboard input with one of the plurality of values which correspond to each of the potential actual input device inputs to create a matching value. The RSID processor 60 outputs 114 a transformed code from the transformed lookup table corresponding to the matching value.

While the description above refers to particular embodiments of the present invention, it will be understood that many modifications may be made without departing from the spirit thereof. The accompanying claims are intended to cover such modifications as would fall within the true scope and spirit of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are intended to be embraced therein.

## Claims

1. A reconfigurable secure input device (RSID), comprising:
an actual input device to transmit input; and
a RSID processor to receive a transformation instruction, and to utilize a plurality of codes, the plurality of codes representing potential actual input device input, to generate a plurality of transformed codes based on the transformation instruction.

2. The RSID of claim 1, wherein a RSID memory section stores the plurality of transformed codes.

3. The RSID of claim 1, wherein the RSID processor receives the input from the actual input device and identifies a matching value, the matching value being one of the plurality of codes representing the potential actual input device input that matches the input from the actual input device, generates a matching transformed code of the plurality of transformed codes corresponding to the matching value, and transmits the matching transformed code.

4. The RSID of claim 3, further including a temporary storage to receive and store the matching transformed code until a sufficient number of matching transformed codes have been generated.

5. The RSID of claim 1, further including a read-only memory to store a public encryption key and a private encryption key, wherein the RSID processor reads the public encryption key and the private encryption key from the read-only memory.

6. The RSID of claim 1, further including an encryption device to generate a RSID public encryption key and a RSID private encryption key, wherein the RSID processor transmits the RSID public encryption key to a computing device to allow the computing device to encrypt information to be transmitted to the RSID.

7. The RSID of claim 6, wherein the RSID receives an encrypted transformation instruction and the RSID processor decrypts the encrypted transformation instruction utilizing the RSID private encryption key instruction before utilization of the transformation instruction to generate the plurality of transformed codes.

8. The RSID of claim 7, wherein the RSID processor utilizes a computing device public encryption key to encrypt the sufficient number of matching transformed codes.

9. The RSID of claim 8, wherein the computing device public encryption key is stored in a memory section before the RSID processor utilizes the computing device public encryption key to encrypt the sufficient number of matching transformed codes.

10. The RSID of claim 1, further including a memory section to store the transformation instruction and to transmit the transformation instruction to the RSID processor.

11. The RSID of claim 10, wherein the first memory section and the second memory section are both located in the same physical memory device.

12. The RSID of claim 10, wherein the first memory section, the second memory section and the third memory section are located in the same physical memory device.

13. The RSID of claim 1, further including a transaction card reader.

14. The RSID of claim 13, wherein the transaction card reader is a smart card reader.

15. The RSID of claim 14, further including a subscriber identity module (SIM) coupled into the smart card reader.

16. The RSID of claim 13, wherein the transaction card reader is a bar code reader.

17. The RSID of claim 13, wherein the transaction card reader is a biometric reader.

18. The RSID of claim 13, wherein the transaction card reader is a memory card reader.

19. A computing device, comprising:
a central processing unit (CPU);
a controller to transmit at least one transformation instruction;
a reconfigurable secure input device (RSID) to receive the instructions from the controller and to transmit encrypted transformed codes to the controller; the RSID including
an actual input device to transmit actual input device input;
a RSID processor, including a standard lookup table containing a plurality of codes and a plurality of values, each of the plurality of codes and the plurality of values corresponding to one of a plurality of potential actual input device inputs, the RSID processor to receive the at least one transformation instruction, to execute the at least one transformation instruction, and to generate a transformed table, the transformed table including a plurality of transformed codes and the plurality of values, wherein the plurality of transformed codes is created by utilization of the at least one transformation instruction.

20. The computing device of claim 19, wherein the RSID further includes a memory section to store the transformed table.

21. The computing device of claim 20, wherein the memory section is internal to the RSID processor.

22. The computing device of claim 19, wherein the RSID processor receives the actual input device input, matches an input value corresponding to one of the plurality of potential actual input device inputs, determines a matching transformed code representing the input value in the transformed lookup table, and outputs the matching transformed code.

23. The computing device of claim 22, further including an encryption key generator to create a RSID public encryption key and an RSID private encryption key.

24. The computing device of claim 23, wherein the encryption key generator is located in the computing device.

25. The computing device of claim 23, wherein the encryption key generator is located within the RSID.

26. The computing device of claim 23, wherein the encryption key generator is located external to the computing device.

27. A method for transforming keyboard input, comprising:
utilizing an at least one transformation instruction to create a plurality of transformed codes, each of the plurality of transformed codes corresponding to one of a plurality of potential actual input device inputs; and
storing the plurality of transformed codes along with a plurality of values in a transformed lookup table, wherein the plurality of values corresponds to the plurality of potential actual input device inputs.

28. The method of claim 27, further including storing the at least one transformation instruction in a first memory section before the at least one transformation instruction is utilized.

29. The method of claim 27, further including receiving an actual input device input.

30. The method of claim 29, further including matching the actual input device input with one of the plurality of potential actual input device inputs to create a matching value.

31. The method of claim 30, further including outputting a matching transformed code corresponding to the matching value from the transformed lookup table.

32. The method of claim 31, further including encrypting the matching transformed code utilizing an at least one encryption instruction to produce an encrypted matching transformed code and transmitting the encrypted transformed code from the reconfigurable secure input device to the computing device.

33. The method of claim 32, further including receiving the at least one encryption instruction from the computing device.

34. The method of claim 32, further including generating the at least one encryption instruction at the reconfigurable secure input device.

35. The method of claim 32, further including receiving the at least one encryption instruction from an encryption generating device.

36. The method of claim 32, further including storing the at least one encryption instruction in a memory section before utilization.

37. The method of claim 31, further including storing the matching transformed code in temporary storage until a sufficient number of the matching transformed codes are resident in the temporary storage.

38. The method of claim 37, further including encrypting the sufficient number of matching transformed codes to produce a plurality of encrypted matching transformed codes and transmitting the plurality of encrypted matching transformed codes from the reconfigurable secure input device to the computing device.

39. A program code storage device, comprising:
a machine-readable storage medium; and
machine-readable program code, stored on the machine readable storage medium, the machine-readable program code having instructions to
utilize an at least one transformation instruction to create a plurality of transformed codes, each of the plurality of transformed codes corresponding to one of a plurality of potential actual input device inputs; and
store the plurality of transformed codes along with a plurality of values in a transformed lookup table, wherein the plurality of values corresponds to the plurality of potential keyboard inputs.

40. The program code storage device of claim 39, further including instructions to store the at least one transformation instruction in a first memory section before the at least one transformation instruction is utilized.

41. The program code storage device of claim 39, further including instructions to match actual input device input received from an actual input device with one of the plurality of potential actual input device inputs to create a matching value.

42. The program code storage device of claim 41, further including instructions to output a matching transformed code corresponding to the matching value from the transformed lookup table.

43. The program code storage device of claim 42, further including instructions to encrypt the matching transformed code utilizing an at least one encryption instruction to produce an encrypted matching transformed code and to transmit the encrypted matching transformed code from the reconfigurable secure input device to the computing device.

44. The program code storage device of claim 42, further including instructions to store the matching transformed code in temporary storage until a sufficient number of the matching transformed codes are resident in the temporary storage and encrypt the sufficient number of matching transformed codes to produce a plurality of encrypted matching transformed codes and transmit the plurality of encrypted matching transformed codes from the reconfigurable secure input device to the computing device.
